(19) Europäisches Patentamt
European Patent Office
Office européen des brevets

(11) Veröffentlichungsnummer: **0 016 344**
**B1**

(12) # EUROPÄISCHE PATENTSCHRIFT

(45) Veröffentlichungstag der Patentschrift: **14.10.81**

(51) Int. Cl.³: **C 01 B 33/28** // C11D3/12

(21) Anmeldenummer: **80100828.5**

(22) Anmeldetag: **20.02.80**

(54) **Verfahren zur Herstellung lagerstabiler, pumpbarer und fliessfähiger Alumosilikat-Suspensionen durch Nassvermahlung.**

(30) Priorität: **23.02.79 DE 2907108**

(43) Veröffentlichungstag der Anmeldung: **01.10.80 Patentblatt 80/20**

(45) Bekanntmachung des Hinweises auf die Patenterteilung: **14.10.81 Patentblatt 81/41**

(84) Benannte Vertragsstaaten: **AT BE CH DE FR IT NL SE**

(56) Entgegenhaltungen:
**DE-A1-2 333 068**
**DE-A1-2 412 836**
**DE-A1-2 412 838**
**DE-A1-2 615 698**
**DE-B1-2 744 784**
**DE-B-1 218 415**
**DE-B2-2 447 021**

(73) Patentinhaber: **BASF Aktiengesellschaft, Carl-Bosch-Strasse 38, D-6700 Ludwigshafen (DE)**

(72) Erfinder: **Leutner, Bernd, Dr., Taunusstrasse 17, D-6710 Frankenthal (DE)**
Erfinder: **Schlimper, Hans-Ulrich, Dr., Im Erlich 74, D-6720 Speyer (DE)**
Erfinder: **Roth, Dieter, Dr., Maria-Eich-Strasse 12c, 8000 München 60 (DE)**
Erfinder: **Kreitner, Ludwig, Dr., Am Steinernen Weg 18, D-6148 Heppenheim (DE)**
Erfinder: **Spahn, Heinrich, Dr., Moltkestrasse 13, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 016 344 B1

BUNDESDRUCKEREI BERLIN

# Verfahren zur Herstellung lagerstabiler, pumpbarer und fließfähiger Alumosilikat-Suspensionen durch Naßvermahlung

Die Erfindung betrifft ein Verfahren zur Herstellung von Alumosilikat-Suspensionen, die lagerstabil, pumpbar und fließfähig sind, ohne daß Dispergier- und Stabilisierhilfsmittel erforderlich sind, durch Naßvermahlung der Alumosilikate.

Alumosilikate mit Kationen, die zum Austausch von Calciumionen befähigt sind, werden gemäß DE-A-2 412 836 und DE-A-2 412 838 als Phosphatersatz in Wasch- und Reinigungsmitteln beschrieben.

Bei der Konfektionierung von Wasch- und Reinigungsmitteln ist es zweckmäßig, diese Alumosilikate in Form von relativ hochkonzentrierten Suspensionen (»slurries«) zu handhaben, da die vorherige Trocknung der Alumosilikate wegen der zusätzlichen Trocknungskosten wirtschaftlich nicht günstig wäre.

Da bei diesen »slurries« aber beim Lagern und Umpumpen häufig eine starke Sedimentation der Alumosilikate eintritt, wurden bisher Dispergiermittel zugesetzt. Gemäß der DE-A-2 615 698 werden als Dispergiermittel Salze polymerer Carbonsäuren, wie Natriumpolyacrylat und ein nichttensidisches, phosphorfreies anorganisches oder organisches Salz, wie Natriumcitrat, als Stabilisierhilfsmittel vorgeschlagen.

Solche Mittel stellen, zumal sie in relativ hohen Konzentrationen anwesend sein müssen, teure organische Zusätze dar und sind außerdem hinsichtlich der Umweltschutzbestimmungen nicht unbedenklich, da Polyacrylate biologisch schlecht abbaubar sind.

Das Ziel der Erfindung bestand in der Auffindung eines Verfahrens, das es gestattet, feinteilige, lagerstabile und pumpbare Alumosilikat-Suspensionen ohne Mitverwendung von Dispergier- und Stabilisierhilfsmitteln herzustellen.

Dieses Ziel wurde gemäß den Patentansprüchen erreicht.

Das Verfahren zur Herstellung lagerstabiler, fließfähiger und pumpbarer wäßriger Suspensionen, die — bezogen auf die Suspension — 20 bis ca. 60 Gewichtsprozent an feinverteilten, wasserunlöslichen Alumosilikaten mit gegen Calcium austauschbaren Kationen enthalten, durch Naßvermahlung der Alumosilikate, dadurch gekennzeichnet, daß man die nach der Herstellung in wäßriger Suspension anfallenden Alumosilikate mechanisch abtrennt, die erhaltene feuchte Alumosilikatmasse ohne Zwischentrocknung direkt oder nach durch Wasserzusatz erfolgter Einstellung auf einen Wassergehalt von bis zu 80 Gewichtsprozent der Naßvermahlung unterwirft und das erhaltene Mahlgut gegebenenfalls auf den gewünschten Feststoffgehalt einstellt.

Naßmahlprozesse sind auf diesem technischen Gebiet an sich bekannt. So lehrt z. B. die DE-B-1 218 415, daß man kristallines Zeolith-(Alumosilikat-)Pulver in Wasser aufschlämmen und naß vermahlen kann. Diese Methode führt aber, abgesehen davon, daß sie sehr langer Verweilzeiten in der Mühle bedarf, nicht zu lagerstabilen Suspensionen, wie weiter unten gezeigt wird.

Unter »Alumosilikaten« im Sinne der Erfindung werden amorphe und kristalline Zeolith-Typen verstanden, welche Kationen enthalten, die gegen Calciumionen austauschbar sind. Es können dabei alle Zeolith-Typen in Betracht gezogen werden, die ein genügendes Austauschvermögen für Calciumionen besitzen, vorzugsweise jedoch Typen der Formel

$$(0,8 \text{ bis } 1,2)\ Me_2O \cdot Al_2O_3 \cdot (1,8 \text{ bis } 2,2)\ SiO_2 \cdot (0 \text{ bis } 6)\ H_2O\ ,$$

in der Me für ein Alkalimetall, vorzugsweise für Natrium oder Kalium, steht.

Als Synthesen für diese Typen kommen alle in Betracht, die nach dem hydrothermalen Prinzip ablaufen, d. h. in wäßrigem Medium unter Erhitzen von Alkalimetallsilikat und -aluminat liefernden Verbindungen oder von Aluminiumsilikat und Alkalimetallhydroxid (siehe unten) durchgeführt werden, wobei je nach Reaktionsbedingungen amorphe oder kristalline Zeolithe entstehen.

Eine Methode, die zu Stoffen führt, welche erfindungsgemäß zur Naßvermahlung geeignet sind, erläutert z. B. die DE-B-2 744 784, gemäß der $SiO_2$, $Al_2O_3$ und Alkalimetallhydroxid enthaltene Lösungen bzw. Suspensionen vereinigt und hydrothermal behandelt werden.

Besonders günstige Ausgangsprodukte für das erfindungsgemäße Verfahren erhält man nach einem gemäß Patentansprüchen 4 und 5 definierten und nachstehend beschriebenen kontinuierlich ablaufenden hydrothermalen Verfahren, das zu einem besonders grobteiligen und daher leicht abtrennbaren Ausgangsmaterial führt. Es entstehen hierbei Suspensionen von Alumosilikaten, deren Teilchengrößen $> 10$, häufig sogar $> 15\ \mu m$ betragen.

Generell geht man hier so vor, daß man unter starkem Rühren in die erste Stufe Alkalimetallaluminat und Alkalimetallsilikat oder Alkalimetallhydroxid und Aluminiumsilikat in wäßriger Lösung bzw. Suspension bei 30 bis 100° C einbringt.

Es können auch Alkalimetallaluminat und -silikat liefernde Verbindungen, wie Alkalimetallhydroxid und $Al_2O_3$ oder $Al(OH)_3$ bzw. Alkalimetallhydroxid und $SiO_2$, Kieselsäure, Kieselsol oder Kieselgur eingesetzt werden.

Im allgemeinen — da am zweckmäßigsten — vereinigt man $Al_2O_3$ oder $Al(OH)_3$, Alkalimetallhydroxid und $SiO_2$ in den genannten Erscheinungsformen oder Aluminiumsilikat (»Metakaolin«) und Alkalimetallhydroxid.

Die Reaktionsmischung wird dann über mindestens eine weitere, vorzugsweise, vor allem, wenn kristalline Alumosilikate erwünscht sind, mindestens 3 weitere Stufen geführt (Reaktorkaskade), wobei die obengenannten Temperaturen beibehalten werden und gegebenenfalls im Rahmen der definitionsgemäßen Grenzen sukzessive angehoben werden können.

Werden kristalline Produkte gewünscht, so empfiehlt es sich, zumindest in der letzten Stufe eine Temperatur zwischen 80 und 100°C einzuhalten. Bei der Herstellung amorpher Produkte genügen Temperaturen von 30 bis ca. 60°C in allen Stufen.

Nach der Abtrennung des Alumosilikats nach der letzten Stufe wird die Mutterlauge in den Prozeß, d. h. in eine der vorhergehenden Stufen zurückgeführt, wobei gleichzeitig die obengenannten Einsatzstoffe ergänzt werden.

Die Abbildung zeigt beispielhaft ein Fließschema für die kontinuierliche Durchführung eines 4-Kaskadenreaktors: Über die Zuleitungen (1) und (2) fließen Alkalimetallsilikate (1) und Alkalimetallaluminate (2) in die Rührkessel (3) bis (6) und von dort in die Abtrennvorrichtung (7), in die gegebenenfalls über die Leitung (9) Waschwasser eingeführt wird. Aus der Abtrennvorrichtung (7) gelangt die abgetrennte feuchte Alumosilikatmasse in die Naßmühle (8), in die über die Leitung (17) gegebenenfalls Wasser eingeführt wird. Die naßgemahlene fertige Suspension wird über die Leitung (16) abgezogen (siehe unten).

Aus der Abtrennvorrichtung (7) wird die Mutterlauge über die Leitung (10) unter eventueller Auskreisung eines Teiles derselben über die Leitung (18) und eventuellem Eindampfen im Gefäß (12) in das Gefäß (13) geführt, wobei über die Leitungen (14) und (15) frisches Aluminat in Form von Alkalihydroxid (14) und $Al(OH)_3$ (15) eingespeist wird. Von dort gelangt die aluminathaltige, aufkonzentrierte Mutterlauge wieder in die Leitung (2), während gleichzeitig über die Leitung (1) frisches Silikat eingespeist wird.

Am Gefäß (12) befindet sich eine Leitung (11), über die Wasserdampf, der bei eventuellem Eindampfen der Mutterlauge entsteht, abgeführt wird.

Im Anschluß an Kessel (5) kann ein Teil der Reaktionsmischung über die Leitung (19) in den Kessel (4) zurückgeführt werden.

Zumindest im letzten Kessel — im vorliegenden Schema in Kessel (6) — hat die Reaktionsmischung eine Zusammensetzung, in Molverhältnissen ausgedrückt, im Bereich von

$Me_2O : SiO_2$ = 1,5 bis 2,5
$SiO_2 : Al_2O$ = 1,7 bis 2,2
$H_2O : Me_2O$ = 25 bis 100, wobei Me für ein Alkalimetallatom steht.

Die nach den verschiedenen Synthesen und speziell der vorstehend beschriebenen Synthese erhaltenen wäßrigen Aufschlämmungen werden mechanisch getrennt (z. B. in der oben beschriebenen Abtrennvorrichtung (7)), vorzugsweise abfiltriert. Der feuchte Rückstand kann direkt dem Mahlprozeß unterworfen werden, zweckmäßig ist es aber ihn vorher auszuwaschen, wobei die Verunreinigungen entfernt und der durch die Synthese bedingte hohe pH-Wert von ca. 12 bis 14 auf die in Waschmitteln übliche Höhe von 10 bis 12 herabgesetzt wird (siehe z. B. obiges Fließschema). Bevorzugt stellt man pH-Werte von 10 bis 11 ein. Das Auswaschen erfolgt je nach Verunreinigungsgrad, der von der Art der Ausgangsstoffe und der Synthese abhängig ist, mit Wasser (siehe oben) oder mit verdünnten Säuren, vorzugsweise Mineralsäuren, welche unter den herrschenden Bedingungen zu keiner chemischen Reaktion mit den Alumosilikaten befähigt sind. Vorzugsweise verwendet man dann Schwefelsäure oder Polyphosphorsäuren.

Der Rückstand, der je nach Abtrennungsmethode, Filtertyp und gegebenenfalls erfolgter Auswaschung verschiedene Mengen an Wasser enthält, wird erfindungsgemäß ohne Zwischentrocknung entweder direkt oder nach Verdünnen mit weiterem Wasser auf einen Wassergehalt von bis zu 80 Gewichtsprozent der Naßmahlung unterworfen.

Eine Zwischentrocknung und anschließende Wiederaufschlämmung führt nicht zu dem erfindungsgemäßen Ergebnis, d. h., die angegebene Arbeitsweise ist zwingend.

Die Naßmahlung findet in gängigen Apparaten, wie Kugelmühlen, Rührwerksmühlen oder Rotormühlen statt. Ein Zusatz von Dispergier- oder Stabilisierhilfsmitteln ist nicht erforderlich.

Die Verweilzeit in der Mühle liegt im allgemeinen bei 0,5 bis 120 Minuten, wobei Teilchengrößen von im Mittel 1 bis 10 µm erhalten werden. Eine Unterschreitung der Zeit führt zu einem Abfall der Stabilität, der Fließ- und Pumpfähigkeit der Suspensionen. Eine Überschreitung bringt keine zusätzlichen Vorteile.

Bevorzugt wählt man Verweilzeiten von 1 bis 60 Minuten, wobei Teilchengrößen von im Mittel 3 bis 5 µm (95% $<$ 10 µm) erhalten werden.

Wenn der Rückstand unverdünnt naßvermahlen wird, kann je nach Wassergehalt die Konzentration bis zu dem obenerwähnten Wassergehalt auch anschließend eingestellt werden.

Die zuzusetzende Menge an Wasser, vor oder nach der Naßvermahlung, ist abhängig von der Abtrennungsmethode, welche den Feuchtigkeitsgrad des Rückstands bedingt. Bei Benutzung eines Vakuumbandfilters weisen die Filterkuchen z. B. eine Feuchte von — bezogen auf die gebundenes Wasser enthaltenden Alumosilikate — etwa 50 Gewichtsprozent auf, während die Feuchte von

Filterkuchen aus Druckfiltern, z. B. aus Filterpressen, in der Größenordnung von ca. 35 Gewichtsprozent liegt.

Die Endkonzentration der Suspensionen soll so bemessen werden, daß der Feststoffgehalt 20 bis ca. 60 Gewichtsprozent beträgt.

Das Überraschende bei dem erfindungsgemäßen Ergebnis besteht darin, daß bisher bekannte Suspensionen derselben Feinteiligkeit nicht lagerstabil und auch nicht genügend pumpbar und fließfähig sind.

So erhält man z. B. gemäß DE-B-2 744 784 zwar ebenfalls feinteilige Dispersionen, die aber die gewünschten Eigenschaften nicht zeigen.

Ebenso ungünstig fällt das Ergebnis aus, wenn man trockenvermahlene Alumosilikate oder getrocknete und anschließend wieder angefeuchtete naßvermahlene Materialien suspendiert. Die Korngröße ist somit offensichtlich nicht die Ursache für das Gelingen der Erfindung.

Die Erfindung wird in den nun folgenden Beispielen näher erläutert.

Die Qualität der entstandenen Suspensionen wird durch visuelles Beobachten des Absetzverhaltens beurteilt. Die Charakterisierung des Absetzverhaltens erfolgt in einem Standzylinder bei einer Suspensionshöhe von 10 cm anhand der durch Sedimentation der Alumosilikatteilchen sich ausbildenden überstehenden klaren Flüssigkeitsschicht. Diese macht bei lagerstabilen Suspensionen nach 24 Stunden nicht mehr als 10 Prozent der Füllhöhe und nach 48 Stunden nicht mehr als 15 Prozent der Füllhöhe aus.

Bei den Versuchen, die den Beispielen zugrunde lagen, wurden nachstehende Mühlen verwendet.

1) Labormühle PE 075 — Volumen: 0,75 l
— Füllgrad: 55% Mahlkörper
— Mahlkörper: Glas/1 mm ∅
Hersteller: Fa. Netzsch, D 8672 Selb, BRD;

2) Reibschalenmühle KM 2 —
Hersteller: Fa. Retsch KG, D 5657 Haan b. Düsseldorf, BRD;

3) Strahlmühle 170 — Volumen: 0,34 l
Hersteller: Fa. BASF AG, 6700 Ludwigshafen, BRD;

4) Mühle LM 15 — Volumen: 15,00 l
— Füllgrad: 70% Mahlkörper
— Mahlkörper: Glas/1 mm ∅
Hersteller: Fa. Netzsch, D 8672 Selb, BRD.

Die Aluminiumsilikat-Filterkuchen, die je nach Filterapparat unterschiedliche Restfeuchten (ca. 40—50 Gew.-%), bezogen auf $Na_2O \cdot Al_2O_3 \cdot 2\,SiO_2 \cdot 4{,}5\,H_2O$ (Zeolith A), aufwiesen, wurden vor der Naßmahlung mit entionisiertem Wasser in einem einfachen Rührbehälter auf einen Feststoffgehalt von 30 bzw. 40 Gew.-% eingestellt und dann entweder portionsweise oder kontinuierlich in die Mühle eingetragen.

Die Werte »$X_{90}$« etc. besagen, daß z. B. 90% der Teilchen kleiner sind, als der angegebene Wert wiedergibt.

## Beispiel 1

In die Labormühle PE 075 werden 0,288 l einer Zeolith A-Suspension, die nach einem der gängigen diskontinuierlichen Herstellungsverfahren erhalten wurde, — 40 Gew.-% Feststoff; Kornverteilung: $X_{90}$: 11 µm; $X_{50}$: 7,4 µm; $X_{15}$: 6 µm — ohne vorherige Zwischentrocknung eingetragen. Die Mahldauer betrug 20 Minuten bei einer Rührerumdrehungszahl von 1200 UpM. Der Feststoff der resultierenden Suspension zeigte folgende

Kornverteilung: $X_{90}$: 5,1 µm;
$X_{50}$: 3,3 µm;
$X_{15}$: 1,7 µm.

Beim Absetztest ergaben sich die nachstehenden Daten:

Klarzone nach 24 h: 8,0%;
Klarzone nach 48 h: 10,5%.

Beispiel 2

Es wurde bei gleichen Versuchsbedingungen gearbeitet, aber eine 30gewichtsprozentige Suspension eingesetzt.

Kornverteilung des Feststoffes

| | $X_{90}$ | $X_{50}$ | $X_{15}$ |
|---|---|---|---|
| Ausgangswerte | 11 µm | 7,4 µm | 6 µm |
| Endwerte | 3,9 µm | 2,9 µm | 1,6 µm |

Absetztest: Klarzone nach 24 h: 6,8%;
Klarzone nach 48 h: 9,5%.

Vergleichsbeispiel A

Ein getrocknetes, pulverförmiges Aluminiumsilikat, $Na_2O \cdot Al_2O_3 \cdot 2\,SiO_2 \cdot 4{,}5\,H_2O$, wurde in der Reibschalenmühle KM 212 Stunden gemahlen.

Kornverteilung:

| | | | |
|---|---|---|---|
| Vor Mahlung: | $X_{90}$: 20 µm; | nach Mahlung: | $X_{90}$: 5,6 µm; |
| | $X_{50}$: 8 µm; | | $X_{50}$: 3,7 µm; |
| | $X_{15}$: 5 µm; | | $X_{15}$: 2,4 µm. |

Dieser Feststoff wurde mit Wasser ohne Zusatz irgendwelcher Dispergiermittel zu einer 40prozentigen Suspension (ohne Zusatz von Dispergierhilfsmitteln) angerührt. Die erhaltene Suspension verhielt sich beim Absetztest grundverschieden von den erfindungsgemäßen Suspensionen. Nach 24 Stunden hatten sich ca. 95% des Festkörpers zu einem nur sehr schwer aufrührbaren Bodenkörper (Volumen: ca. 35%, bezogen auf das Gesamtvolumen der Suspension) abgesetzt, während die überstehende Flüssigkeit deutlich getrübt war. Nach 48 Stunden war der Bodenkörper nicht mehr aufrührbar. Die überstehende Flüssigkeit begann sich langsam zu klären.

Vergleichsbeispiel B

Ein getrocknetes, pulverförmiges Aluminiumsilikat, $Na_2O \cdot Al_2O_3 \cdot 2\,SiO_2 \cdot 4{,}5\,H_2O$, wurde in einer Strahlmühle gemahlen. Der sich ergebene Feststoff wurde mit entionisiertem Wasser zu einer 40prozentigen Suspension angemaischt und in der Labormühle PE 075 analog Beispiel 1 weiterbehandelt.

Kornverteilung des Feststoffes

| | $X_{90}$ | $X_{50}$ | $X_{15}$ |
|---|---|---|---|
| Ausgangswerte*) | 6,6 | 4,9 | 3,5 |
| Endwerte | 4,9 | 3,3 | 1,8 |

*) Nach Strahlmahlung.

Das Absetzverhalten war der Suspension nach Vergleichsbeispiel A ähnlich ungünstig, nur war der Bodenkörper leichter aufrührbar.

Im Gegensatz zu den erfindungsgemäßen Suspensionen, die sich nach den Testzeiten problemlos mit dem Feststoff ausgießen ließen, blieb der Bodenkörper im Falle der Vergleichsbeispiele beim Ausgießen als feste Masse zurück.

Die folgenden Beispiele beschreiben eine kontinuierliche Mahlung.

Beispiel 3

200 kg Filteraustrag (28,6% Feuchte, bezogen auf $Na_2O \cdot Al_2O_3 \cdot 2\ SiO_2 \cdot 4{,}5\ H_2O$) wurden in einem Rührkessel (V = 300 l) eingetragen und mit 157 kg entionisiertem Wasser angemaischt (≙ einer 40gewichtsprozentigen Suspension). Diese Aufschlämmung wurde mit einem Durchsatz von 1500 kg/h in der Mühle LM 15 behandelt.

Kornverteilung des Feststoffes

| | $X_{90}$ | $X_{50}$ | $X_{15}$ |
|---|---|---|---|
| Ausgangswerte | 7,4 µm | 5,9 µm | 4,9 µm |
| Endwerte | 4,9 µm | 3,4 µm | 1,5 µm |

Absetztest: Klarzone nach 24 h: 8,3%;
Klarzone nach 48 h: 12,0%.

Beispiel 4

200 kg Filteraustrag (51,8% Feuchte, bezogen auf $Na_2O \cdot Al_2O_3 \cdot 2\ SiO_2 \cdot 4{,}5\ H_2O$) wurden in einem Rührkessel (V = 300 l) mit 41 kg entionisiertem Wasser angemaischt (≙einer 40gewichtsprozentigen Suspension). Diese Aufschlämmung wurde mit einem Durchsatz von 450 kg/h in der Mühle LM 15 behandelt.

Kornverteilung des Feststoffes

| | $X_{90}$ | $X_{50}$ | $X_{15}$ |
|---|---|---|---|
| Ausgangswerte | 8,1 µm | 6,8 µm | 5,9 µm |
| Endwerte | 3,7 µm | 1,8 µm | 0,6 µm |

Absetztest: Klarzone nach 24 h: 5,2%;
Klarzone nach 48 h: 8,9%.

Beispiel 5

Für die kontinuierliche Herstellung eines Natriumalumosilikates der Zusammensetzung $Na_2O \cdot Al_2O_3 \cdot 2\ SiO_2 \cdot 4{,}5\ H_2O$ wurde eine 6stufige Reaktionskaskade eingesetzt.

Alle Gefäße der Kaskade waren mit Magnetrührern versehen. Die Suspension wurde jeweils am Gefäßboden abgezogen und der nächsten Kaskadenstufe an der Oberfläche zugeführt. 20 Vol.-% der aus der Stufe 5 fließenden Suspension wurde in Stufe 3 zurückgeführt.

Die Verweilzeiten und Temperaturen sind in einer Tabelle zusammengestellt:

| | Reaktionsgefäß | | | | | |
|---|---|---|---|---|---|---|
| | 1 | 2 | 3 | 4 | 5 | 6 |
| Temperatur (°C) | 50 | 50 | 70 | 85 | 90 | 93 |
| Verweilzeit (h) | 0,12 | 0,48 | 0,32 | 0,32 | 0,32 | 0,38 |

Im ersten Reaktionsgefäß erfolgte die Fällung durch Eindosierung einer handelsüblichen Wasserglaslösung der Zusammensetzung 27,0% $SiO_2$ und 8,3% $Na_2O$ (Dichte 1,355) sowie einer Natriumaluminatlösung mit einem Gehalt von 4,8% $Al_2O_3$ und 8,54% $Na_2O$. Die Wasserglaslösung wurde mit einer Geschwindigkeit von 0,6 l/h, die Aluminatlösung mit 3,6 l/h eindosiert.

Rechnet man die Molverhältnisse der einzelnen Komponenten in der Gesamtmischung aus, so erhält man

$NaO_2/SiO_2 = 1{,}9$, $SiO_2/Al_2O_3 = 1{,}9$ und $H_2O/Na_2O = 32$.

Das aus dem letzten Reaktionsgefäß abfließende Produkt bestand aus röntgenographisch fast reinem Zeolith A mit nur Spuren an Hydroxysodalith (< 2%). Das mittlere Teilchenspektrum lag bei $X_{50} = 20\ \mu m$.

Zur Aufkonzentration des Feststoffgehaltes der Suspension wurde diese in ein Eindickgefäß geleitet, aus dem der angedichte Bodensatz zur Filtration abgezogen wurde. Der geklärte Überlauf wurde nach Aufkonzentrierung mit $Al_2O_3$ und $Na_2O$ wieder der Fällung zugeführt. Der gut ausgewaschene Filterkuchen wies einen Restwassergehalt von nur noch 25 bis 30 Prozent auf. Unter Zusatz von destilliertem Wasser ergab sich nach einer einzigen Passage von 20 min durch eine 0,75-l-Labor-Rührwerksmühle, die mit 0,425 l Glaskugeln von 1 mm Durchmesser gefüllt war, bei 1200 UpM des Exzenterringrührers eine fließfähige und damit auch pumpbare Suspension mit 40% Feststoffgehalt. Die mittlere Teilchengröße lag bei $X_{50} = 2{,}5\ \mu m$, der Anteil unter 1 µm bei weniger als 10%, der Anteil oberhalb von 15 µm erheblich unter 5%. Bei nur 10 min Verweilzeit in der Rührwerksmühle ergab sich eine mittlere Teilchengröße von $X_{50} = 4{,}2\ \mu m$. Größer als 15 µm waren weniger als 1 Gew.-%.

Der Absetztest ergab nach 24 Stunden eine Klarzone von 8,5%, nach 48 Stunden von 11,5%.

## Beispiel 6

### Kontinuierliche Herstellung einer naßgemahlenen Suspension an amorphem Natriumalumosilikat $Na_2O \cdot Al_2O_3 \cdot 2\ SiO_2 \cdot x\ H_2O$*)

Das Beispiel demonstriert die kontinuierliche Herstellung einer lagerstabilen Suspension an amorphem Natriumalumosilikat.

Es wurde eine nur zweistufige Kaskade eingesetzt:

| | Reaktionsgefäß | |
|---|---|---|
| | 1 | 2 |
| Temperatur (°C) | 50 | 50 |
| Verweilzeit (h) | 0,12 | 0,38 |

Der Aufbau und Betrieb der beiden Kaskadenstufen entsprach den Angaben von Beispiel 1. In Gefäß 1 wurde kontinuierlich eine Wasserglaslösung (27,0% $SiO_2$, 8,3% $Na_2O$) zu 0,6 l/h sowie eine Natriumaluminatlösung (11,0% $Na_2O$, 4,8% $Al_2O_3$, Rest $H_2O$) zu 3,6 l/h eindosiert. Die in Gefäß 1 gebildete Suspension floß durch Gefäß 2 und wurde hier abgezogen.

In einem anschließenden Klärgefäß erfolgte eine Vorklärung durch einfache Sedimentation. Die an Feststoff angereicherte Suspension wurde vom Boden des Vorklärgefäßes abgezogen und filtriert. Filtrat und durch Vorklärung gewonnene Lösung wurden mit NaOH und $Al(OH)_3$ wieder auf 11,0% $Na_2O$ und 4,8% $Al_2O_3$ aufkonzentriert und erneut dem Fällungsprozeß zugeführt.

Die Molverhältnisse in der Gesamtmischung aus Wasserglaslösung und Natriumaluminatlösung lagen bei $Na_2O/SiO_2 = 2{,}4$; $SiO_2/Al_2O_3 = 1{,}8$ und $H_2O/Na_2O = 26$.

Das erhaltene Produkt bestand aus einem röntgenographisch amorphen Natriumalumosilikat der chemischen Zusammensetzung $Na_2O \cdot Al_2O_3 \cdot 2\ SiO_2 \cdot x\ H_2O$, mit x = 0—ca. 3, je nach Trockentemperaturen und -zeiten für das amorphe Alumosilikat (1 h, 800° C; 16 h, 25° C).

Der feuchte Filterkuchen mit 64% Gesamtwassergehalt konnte in einer Mühle bei 30 Gew.-% Festsubstanz und bei Verweilzeiten zu 5, 10 und 20 min auf $X_{50} = 2{,}5\ \mu m$ bzw. 1,8 µm bzw. 1,3 µm herabgemahlen werden.

Die durch die Behandlung in der Naßmühle erhaltenen Suspensionen mit 30% Festsubstanz erwiesen sich als gut fließfähig und pumpbar.

Absetzverhalten: Klarzone (24 h): 8%
Klarzone (48 h): 10,5%.

*) Bei amorphen Produkten stark schwankender Wassergehalt.

**Patentansprüche**

1. Verfahren zur Herstellung lagerstabiler, fließfähiger und pumpbarer wäßriger Suspensionen, die — bezogen auf die Suspension — 20 bis ca. 60 Gewichtsprozent an feinverteilten, wasserunlöslichen Alumosilikaten mit gegen Calcium austauschbaren Kationen enthalten, durch Naßvermahlung der Alumosilikate, dadurch gekennzeichnet, daß man die nach der Herstellung in wäßriger Suspension anfallenden Alumosilikate mechanisch abtrennt, die erhaltene feuchte Alumosilikatmasse ohne Zwischentrocknung direkt oder nach durch Wasserzusatz erfolgter Einstellung auf einen Wassergehalt von bis zu 80 Gewichtsprozent der Naßvermahlung unterwirft und das erhaltene Mahlgut gegebenenfalls auf den gewünschten Feststoffgehalt einstellt.

2. Verfahren nach Anspruch 1, dadurch gekennzeichnet, daß man vor der Naßvermahlung mit Wasser oder einer wäßrigen Mineralsäure so lange auswäscht, bis sich ein pH-Wert von 10 bis 11 einstellt.

3. Verfahren nach Anspruch 1 oder 2, dadurch gekennzeichnet, daß die Verweilzeit bei der Naßvermahlung 1 bis 60 Minuten beträgt.

4. Verfahren nach Anspruch 1 bis 3, dadurch gekennzeichnet, daß man eine naß zu vermahlende Alumosilikatmasse einsetzt, die nach folgendem kontinuierlichen Verfahren bei Temperaturen von 30 bis 100° C erhalten worden ist:

a) Vereinigung von Alkalimetallsilikat und Alkalimetallaluminat, von Alkalimetallsilikat und Alkalimetallaluminat liefernden Verbindungen oder von Aluminiumsilikat und Alkalimetallhydroxid in wäßrigem Medium,
b) Führung der entstandenen Reaktionsmischung über eine Reaktorkaskade mit mindestens zwei Stufen mit einer Gesamtverweilzeit von 0,1 bis ca. 8 Stunden,
c) Abtrennung des gebildeten Alumosilikats von der Mutterlauge und
d) Rückführung der Mutterlauge in eine der vorhergehenden Stufen und Ergänzen der bei der Reaktion verbrauchten Einsatzstoffe, wobei die Reaktionsmischung mindestens in der letzten Stufe eine molare Zusammensetzung von

$Me_2O : SiO_2$ = 1,0 bis 2,5
$SiO_2 : Al_2O_3$ = 1,5 bis 2,2
$H_2O : Me_2O$ = 25 bis 100

aufweist, wobei Me für ein Alkalimetall steht.

5. Verfahren nach Anspruch 1 bis 4, dadurch gekennzeichnet, daß man eine kristalline Alumosilikatmasse der Naßvermahlung unterwirft, die gemäß Anspruch 4 erhalten worden ist, wobei mindestens in der letzten Reaktionssstufe eine Temperatur von 80 bis 100° C eingehalten wurde.

**Claims**

1. A process for the preparation of storagestable, pourable and pumpable aqueous suspensions which contain, based on the suspension, from 20 to about 60 per cent by weight of finely divided, water-insoluble aluminosilicates with calcium-exchangeable cations, by wet milling of the aluminosilicates, characterized in that the aluminosilicates which are obtained in aqueous suspension after their preparation are separated off mechanically, the resulting moist aluminosilicate mass is wet-milled without intermediate drying, either directly or after having added water to bring its water content to a value of up to 80 per cent by weight, and the resulting milled material is, where necessary, brought to the desired solids content.

2. A process as claimed in claim 1, characterized in that, before wet milling, the moist aluminosilicats is washed with water or with an aqueous mineral acid until the pH is from 10 to 11.

3. A process as claimed in claim 1 or 2, characterized in that the wet milling residence time is from 1 to 60 minutes.

4. A process as claimed in claims 1 to 3, characterized in that the aluminosilicate mass to be wet-milled has been obtained at from 30 to 100° C by the following continuous process:

a) the alkali metal silicate and alkali metal aluminate, alkali metal silicate donor and alkali metal aluminate donor, or aluminum silicate and alkali metal hydroxide, are brought together in an aqueous medium,
b) the resulting reaction mixture is passed through a reactor cascade having not less than two stages, with a total residence time of from 0.1 to about 8 hours,
c) the resulting aluminosilicate is separated from the mother liquor, and
d) the mother liquor is recycled to one of the preceding stages and the starting materials consumed

during the reaction are replenished, the reaction mixture having, no later than the last stage, a molar composition corresponding to

$Me_2O : SiO_2 = 1.0-2.5$
$SiO_2 : Al_2O_3 = 1.5-2.2$
$H_2O : Me_2O = 25-100$

where Me is an alkali metal.

5. A process as claimed in claims 1 to 4, characterized in that a crystalline aluminosilicate mass, which has been obtained according to claim 4, a temperature of from 80 to 100° C being maintained at least in the last reaction stage, is subjected to wet milling.

**Revendications**

1. Procédé de préparation de suspensions aqueuses stables au stockage, pouvant être pompées et coulées, contenant par rapport à la suspension entre 20 et environ 60% en poids d'alumino-silicates insolubles dans l'eau à cations remplaçables par le calcium finement dispersés, par broyage humide des alumino-silicates, caractérisé en ce que l'on sépare par voie mécanique l'alumino-silicate obtenu en suspension aqueuse, on soumet la masse d'alumino-silicate humide sans séchage intermédiaire, soit telle quelle, soit après addition d'eau pour en ajuster la teneur en eau à une valeur pouvant aller jusqu'à 80% en poids, à un broyage humide, puis on ajuste le cas échéant la teneur en matière solide du produit broyé à la valeur voulue.

2. Procédé suivant la revendication 1, caractérisé en ce que le broyage humide est précédé d'un lavage à l'eau ou avec un acide minéral aqueux jusqu'à l'obtention d'un pH entre 10 et 11.

3. Procédé suivant l'une des revendications 1 et 2, caractérisé en ce que la durée du broyage humide est de 1 à 60 minutes.

4. Procédé suivant l'une des revendications 1 à 3, caractérisé en ce que la masse d'alumino-silicate à soumettre au broyage humide est préparée à une température entre 30 et 100° C par le procédé continu ci-après:

a) la réunion dans un milieu aqueux d'un silicate de métal alcalin et d'un aluminate de métal alcalin, ou de composés donnant un silicate de métal alcalin et un aluminate de métal alcalin, ou de silicate d'aluminium et d'un hydroxyde de métal alcalin;
b) le passage du mélange réactionnel obtenu à travers une cascade de réacteurs à au moins deux étages avec une durée de séjour totale de 0,1 à environ 8 heures;
c) la séparation de l'alumino-silicate obtenu de la lessive mère et
d) le recyclage de la lessive mère dans un des stades précédents avec remplacement des produits de départ consommés dans la réaction, le mélange réactionnel possédant au moins dans le dernier stade une composition molaire de:

$Me_2O : SiO_2 = 1{,}0$ à $2{,}5$
$SiO_2 : Al_2O_3 = 1{,}5$ à $2{,}2$
$H_2O : Me_2O = 25$ à $100$

Me désignant un métal alcalin.

5. Procédé suivant l'une des revendications 1 à 4, caractérisé en ce que l'on soumet à un broyage humide la masse d'alumino-silicate obtenue par le procédé suivant la revendication 4, dans lequel le dernier stade au moins se déroule à une température comprise entre 80 et 100° C.

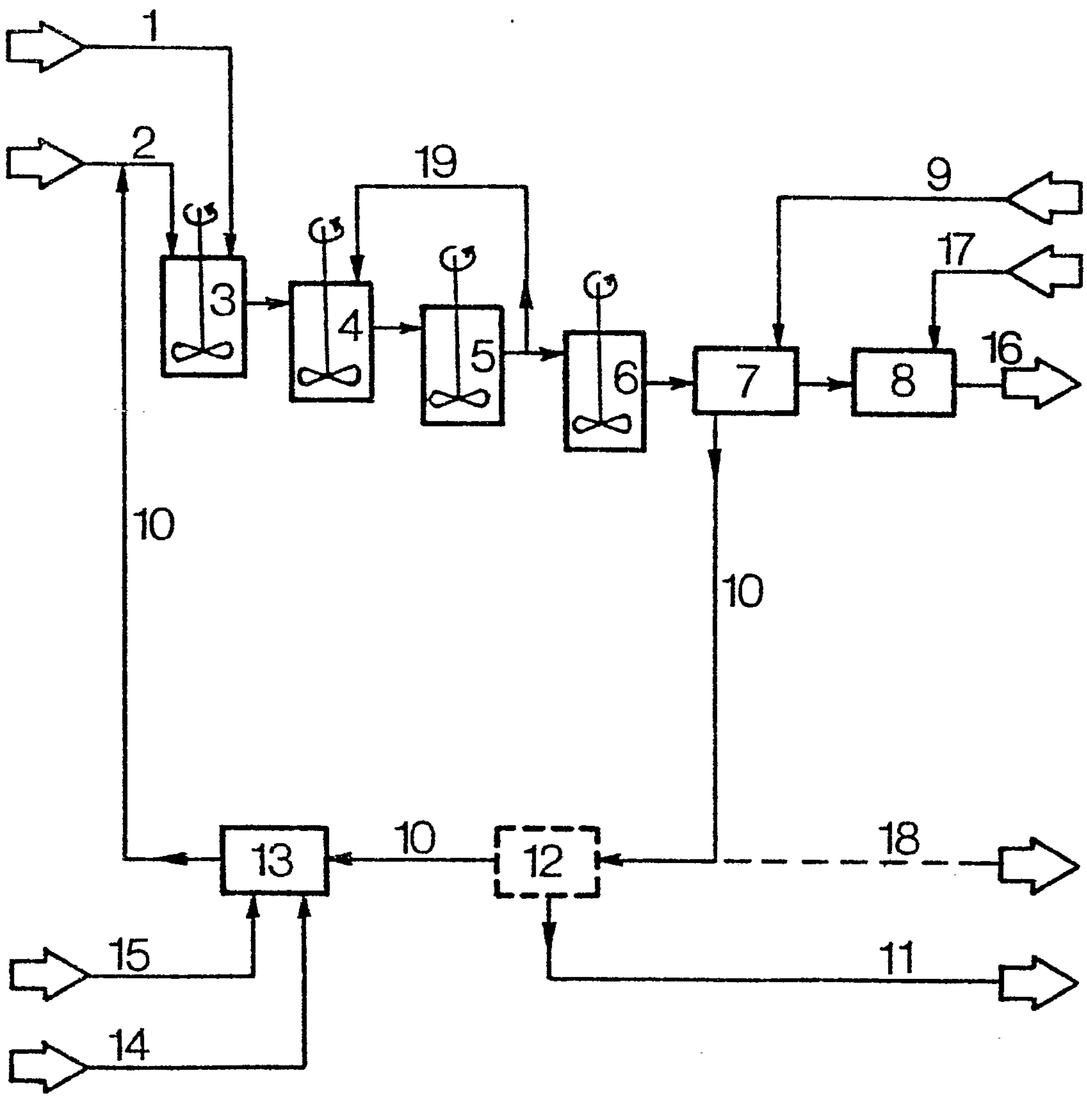
1
2
19
9
17
3
4
5
6
7
8
16
10
10
18
13
10
12
15
11
14